Europäisches Patentamt

(19) European Patent Office

Office européen des brevets

(11) Numéro de publication: **0 211 730**
**B1**

(12) **FASCICULE DE BREVET EUROPÉEN**

(45) Date de publication du fascicule du brevet:
07.02.90

(21) Numéro de dépôt: **86401549.0**

(22) Date de dépôt: **11.07.86**

(51) Int. Cl. ⁵: **F 16 H  7/02, F 16 G  1/28**

(54) Transmission peu bruyante par poulies et courroie.

(30) Priorité: **26.07.85 FR 8511438**

(43) Date de publication de la demande:
**25.02.87 Bulletin 87/09**

(45) Mention de la délivrance du brevet:
**07.02.90 Bulletin 90/06**

(84) Etats contractants désignés:
**BE DE GB IT**

(56) Documents cité:
**CH-A-357 598**
**CH-A-422 458**
**DE-A-3 124 320**
**DE-A-3 306 488**
**DE-C-448 818**
**FR-E-82 970**
**LU-A-39 020**
**US-A-1 334 511**
**US-A-3 120 409**

(73) Titulaire: **CENTRE TECHNIQUE DES INDUSTRIES MECANIQUES**
**52, avenue Félix-Louat B.P. 67**
**F-60304 Senlis Cédex (FR)**

(72) Inventeur: **Deschamps, Marc**
**11, rue Renoir**
**F-60300 Senlis (FR)**

(74) Mandataire: **Cilsci, Serge**
**S.A. FEDIT-LORIOT CONSEILS EN PROPRIETE INDUSTRIELLE 38, avenue Hoche**
**F-75008 Paris (FR)**

EP 0 211 730 B1

LIBERGRAF, STOCKHOLM 1990

## Description

La présente invention concerne les transmissions par poulies et courroie.

On sait que les transmissions à courroies, notamment celles utilisant des courroies crantées dites "synchrones", bien que moins bruyantes que les transmissions à chaîne ou à engrenages, sont cependant génératrices de bruits d'un niveau relativement élevé, surtout dès que les vitesses linéaires de fonctionnement dépassent quelques mètres/seconde ou que la charge transmise par la courroie est importante. On connaît des travaux sur la réduction du bruit des transmissions à courroie crantée proposant de percer des trous dans la poulie (DE-A-3 124 320). On connaît aussi des recherches concernant des courroies crantées à forme particulière du profil de la dent (DE-A-3 306 488) en vue de réduire le bruit.

La présente invention a pour but de réduire fortement le bruit produit par les transmissions.

L'invention a pour objet une transmission par poulies et courroie dans laquelle la courroie est percée d'orifices de mise en communication de l'air situé sur les deux faces opposées.

Des perforations multiples sont ménagées dans la courroie pour que l'air puisse communiquer entre le dessus et le dessous de la courroie. Dans le cas d'une courroie crantée, les perforations peuvent être prévues à travers les dents ou/et à travers les creux entre les dents.

La mise en communication de l'air situé au-dessus et au-dessous de la courroie et/ou de l'air situé au-dessus et au-dessous de la surface active de la poulie produit une modification des mécanismes de génération du bruit et du rayonnement accoustique de l'ensemble de la transmission. Cette modification se traduit par une réduction sensible du bruit produit par la transmission.

L'invention sera mieux comprise à la lecture de la description détaillée qui va suivre et à l'examen des dessins annexés qui représentent, à titre d'exemples non limitatifs divers modes de réalisation de l'invention.

La Figure 1 est une vue d'une transmission par poulies et courroie.

Les Figures 2 et 3 sont des vues partielles en perspective d'une courroie crantée comportant des perforations suivant l'invention.

La Figure 4 est une courbe comparative des niveaux sonores d'une transmission classique et d'une transmission suivant l'invention.

On a représenté, pour mémoire, sur la figure une transmission à poulies et courroies comprenant une poulie menante 4 calée sur un arbre menant 6, une poulie menée 8 calée sur un arbre mené 10 et une courroie 12.

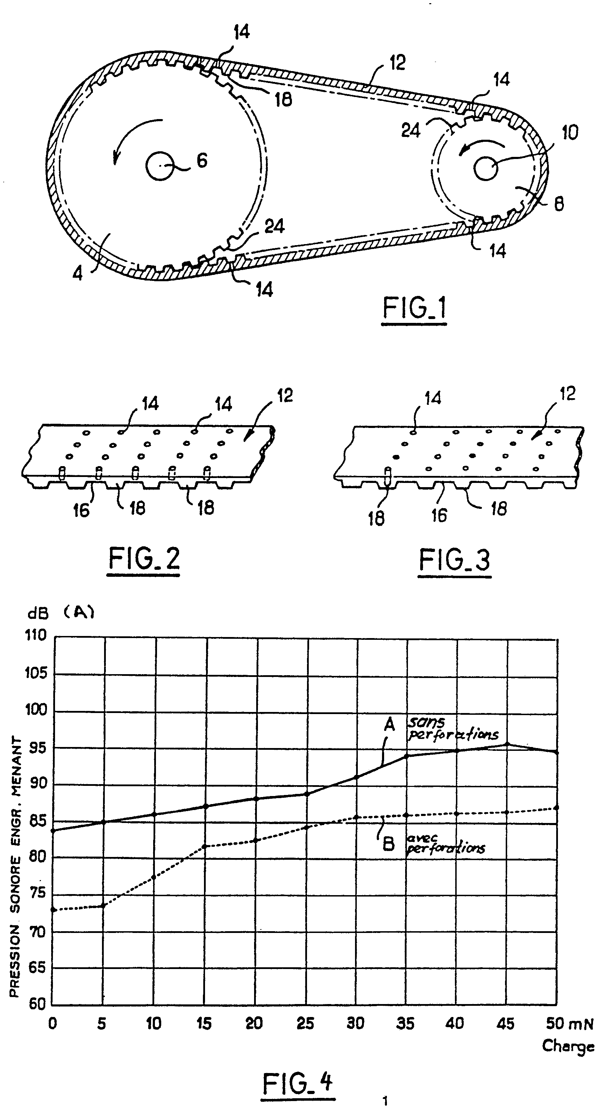

On a représenté une courroie crantée 12 coopérant avec des poulies dentées 4 et 8, car c'est dans ce type de transmissions que l'invention s'applique le plus avantageusement. La courroie 12 est percée de rangées de perforations 14 qui débouchent sur les deux faces de la courroie. Sur la figure 2 les perforations débouchent, sur le dessous de la courroie, dans les intervalles 16 entre les dents 18 de la courroie. Dans le mode de réalisation de la Figure 3, les perforations sont ménagées dans l'épaisseur des dents 18 elles-mêmes.

On peut par exemple prévoir quatre perforations 14 dans chaque rangée. Les courroies étant en général renforcées par une armature en câble métallique, il est préférable de prévoir les perforations entre les brins du câble pour préserver l'armature. Dans ce cas les perforations peuvent avoir la forme de fentes, au lieu de trous à section circulaire comme représenté sur les Figure 2 et 3, ces fentes étant orientées de préférence parallèlement aux brins de renforcement de la courroie. L'emplacement, la forme, les dimensions, le nombre et la disposition des trous ou des fentes peuvent varier et être choisis pour obtenir la meilleure réduction du bruit de la transmission.

L'invention s'applique notamment aux transmissions à courroies crantées en polyuréthane avec armature en fil d'acier, mais également aux courroies crantées en néoprène avec armature en fibre de verre ou fibre synthétique.

Bien que le problème du bruit soit moins important avec des transmissions à courroie plate ou à courroie striée dans le sens de la longueur des perforations suivant l'invention, dans la courroie, peuvent être avantageuses, notamment du fait que l'échappement de l'air à travers les perforations évite la compression et la détente d'air entre poulie et courroie, ce qui améliore l'adhérence.

Des essais comparatifs ont été faits sur des transmissions à courroies crantées, avec et sans perforations. Le résultat d'un de ces essais est donné sur la Figure 4.

Pour cet essai on a utilisé une poulie menante et une poulie menée identiques à deux flasques ayant 40 dents. La courroie crantée était une courroie à dents sensiblement trapézoïdales, au pas de 10 mm.

Pour l'une des transmissions, la courroie a été percée de rangées de quatre perforations, comme représenté sur la Figure 2. Les poulies ne comportaient pas de perforations. L'essai a été fait à la vitesse de 3.000 T/m pour des charges croissantes indiquées en abcisse. Le niveau sonore, en fonction de la charge, a été mesuré à proximité de l'engrènement menant et est porté en ordonnées.

La courbe A montre les résultats de la transmission classique, sans perforations dans la courroie; la courbe B montre les résultats de la transmission suivant l'invention, avec des perforations dans la courroie.

Il ressort clairement que le bruit produit par la transmission est fortement réduit (courbe B), le gain étant variable en fonction de la charge transmise par la courroie. Ce gain peut être de l'ordre de 10dB et, dans certains cas de fonctionnement, peut atteindre et dépasser 15dB. Ce gain peut être attribué à une modification des mécanismes de génération du bruit et du rayonnement accoustique de l'ensemble de la transmission, du fait de l'échappement de l'air à travers la courroie. On a pu observer que des modifications de la disposition et des dimensions des perforations déplaçaient la réponse en fréquence de la courroie.

## Revendications

1. Transmission par poulies dentées et courroie crantée, dans laquelle l'un des organes de ladite transmission est percé de perforations de mise en communication de l'air situé sur les deux faces opposées dudit organe caractérisée en ce que, la courroie crantée (12), est percée de perforations (14).

2. Transmission suivant la revendication 1, caractérisée en ce que les perforations (14) sont disposées dans les intervalles (16) entre les dents (18) de la courroie.

3. Transmission suivant la revendication 1, caractérisée en ce que les perforations (14) sont disposées à travers les dents (18) de la courroie .

4. Transmission suivant l'une des revendications 1 à 3, caractérisée en ce que les perforations (14) à travers la courroie crantée sont disposées en rangées.

5. Transmission suivant l'une des revendications 1 à 4, caractérisée en ce que les perforations à travers la courroie sont en forme de fentes qui sont parallèles aux brins de renforcement de la courroie.

6. Courroie crantée de transmission, caractérisée en ce qu'elle comporte des perforations (14) traversant de part en part l'épaisseur de la courroie (12).

## Patentansprüche

1. Zahnscheiben-Zahnriemen-Getriebe, wobei eines der Elemente dieses Getriebes von Durchlochungen durchsetzt ist, die mit der auf den beiden entgegengesetzten Flächen dieses Elements befindlichen Luft in Verbindung stehen, dadurch gekennzeichnet, daß der Zahnriemen (12) von Durchlochungen (14) durchsetzt ist.

2. Getriebe nach Anspruch 1 dadurch gekennzeichnet, daß die Durchlochungen (14) in den Zwischenräumen (16) zwischen den Zähnen (18) des Riemens angeordnet sind.

3. Getriebe nach Anspruch 1 dadurch gekennzeichnet, daß die Durchlochungen (14) quer durch die Zähne (18) des Riemens hindurch angeordnet sind.

4. Getriebe nach einem der Ansprüche 1 bis 3, dadurch gekennzeichnet, daß die quer durch den Riemen hindurch verlaufenden Durchlochungen (14) in Reihen angeordnet sind.

5. Getriebe nach einem der Ansprüche 1 bis 4, dadurch gekennzeichnet, daß die quer durch den Riemen hindurch verlaufenden Durchlochungen die Gestalt von Schlitzen haben, welche parallel zu Verstärkungsfäden des Riemens liegen.

6. Zahn-Treibriemen, dadurch gekennzeichnet, daß dieser mit Durchlochungen (14) versehen ist, die die Dicke des Riemens (12) gänzlich durchqueren.

## Claims

1. Drive by means of toothed pulleys and toothed belt in which one of the elements of said drive is pierced with perforations for establishing a communication for air located on the two opposite faces of said element, characterized in that the toothed belt (12) is pierced with perforations (14).

2. Drive in accordance with claim 1, characterized in that the perforations (14) are disposed within the intervals (16) between the teeth (18) of the belt.

3. Drive in accordance with claim 1, characterized in that the perforations (14) are disposed through the teeth (18) of the belt.

4. Drive in accordance with one of claims 1 to 3, characterized in that the perforations (14) through the belt are disposed in rows.

5. Drive in accordance with one of claims 1 to 4, characterized in that the perforations through the belt are in the form of slots which are parallel to the reinforcement strands of the belt.

6. Toothed drive belt, characterized in that it is provided with perforations (14) which pass right through the thickness of the belt (12).

FIG_1

FIG_2

FIG_3

FIG_4